# EUROPÄISCHE PATENTANMELDUNG

(11) **EP 4 520 236 A1**
(43) Veröffentlichungstag der Anmeldung: **12.03.2025**
(21) Anmeldenummer: 23195325.8
(22) Anmeldetag: 05.09.2023
(51) Int. Cl.: A47L 7/00, A47L 9/28, B23B 47/34, B23Q 11/00, B25F 5/00, B25D 17/14

(54) **WERKZEUGMASCHINE MIT INTEGRIERTER ERMITTLUNG EINES VOLUMEN-STROMS UND VERFAHREN ZUM BETRIEB DER WERKZEUGMASCHINE**

(71) Anmelder: Hilti Aktiengesellschaft, 9494 Schaan (LI)
(72) Erfinder: Krämer, Stefan, 86842 Türkheim (DE)
(74) Vertreter: Hilti Aktiengesellschaft Corporate Intellectual Property

(57) **Zusammenfassung**

Werkzeugmaschine (10), die zur Durchführung von Arbeiten mit einem Werkzeug (14) verbindbar ist, wobei die Werkzeugmaschine eine Absaugvorrichtung (12) zum Absaugen von Staub aufweist, der bei der Arbeit mit der Werkzeugmaschine entsteht. Die Werkzeugmaschine weist mindestens ein Mittel (18) zur Ermittlung eines Volumenstroms durch die Absaugvorrichtung auf.

Verfahren zum Betrieb der Werkzeugmaschine, bei dem die Mess-Werte für den Volumenstrom mit Vergleichswerten verglichen werden, wobei ein Warnsignal ausgegeben wird, wenn der Volumenstrom beispielsweise zu gering ist, um eine ausreichende Staubabsaugung zu gewährleisten.

Auf diese Weise kann der Nutzer der Werkzeugmaschine vor einer zu hohen Staubexposition geschützt werden und der Arbeitsort der Werkzeugmaschine kann sauber und staubfrei gehalten werden.

## Beschreibung

Die vorliegende Erfindung betrifft eine Werkzeugmaschine, die zur Durchführung von Arbeiten mit einem Werkzeug verbindbar ist, wobei die Werkzeugmaschine eine Absaugvorrichtung zum Absaugen von Staub aufweist, der bei der Arbeit mit der Werkzeugmaschine entsteht. Die Werkzeugmaschine weist mindestens ein Mittel zur Ermittlung eines Volumenstroms durch die Absaugvorrichtung auf. In einem zweiten Aspekt betrifft die Erfindung ein Verfahren zum Betrieb einer Werkzeugmaschine, bei dem die Mess-Werte für den Volumenstrom mit Vergleichswerten verglichen werden, wobei ein Warnsignal ausgegeben wird, wenn der Volumenstrom beispielsweise zu gering ist, um eine ausreichende Staubabsaugung zu gewährleisten. Auf diese Weise kann der Nutzer der Werkzeugmaschine vor einer zu hohen Staubexposition geschützt werden und der Arbeitsort der Werkzeugmaschine kann sauber und staubfrei gehalten werden.

### Hintergrund der Erfindung:

Im Bereich der Werkzeugmaschinen sind solche Geräte bekannt, die bei der Arbeit Staub erzeugen. Dabei kann es sich beispielsweise um Betonstaub handeln, der entsteht, wenn Löcher in einen Untergrund aus Beton gebohrt werden, wenn eine Oberfläche bearbeitet oder geschliffen wird oder wenn Schnitte in einen Untergrund aus Beton eingebracht werden. Wenn es sich bei dem zu bearbeitenden Untergrund um Holz handelt, können kleine Partikel, wie Späne, erzeugt werden. Im Sinne dieser Erfindung werden solche Späne, feine Partikel oder Bohrstaub als "Staub" bezeichnet. Einige Werkzeugmaschinen, bei deren Arbeit Staub entsteht, können mit Sauggeräten, wie Staubsaugern, Entstaubern oder Nass-Trocken-Saugern, verbunden werden, um den Staub abzusaugen. Allerdings ist der Nutzer der Werkzeugmaschine häufig sehr stark mit der Durchführung der Arbeit mit der Werkzeugmaschine beschäftigt, dass oftmals keine Zeit bleibt, um die Güte der Staubabsaugung zu überwachen.

Beispielsweise offenbart die EP 2 946 710 A1 eine Werkzeugmaschine mit einem Partikelabfuhr-Anschluss. In der EP 2 946 710 A1 wird eine Überwachungsvorrichtung vorgeschlagen, die ein Präsenzsignal bereitstellen kann, welches angibt, ob eine Partikelsammeleinrichtung an einem Partikelabfuhr-Anschluss vorhanden ist.

Darüber hinaus wird in der WO 2929 126 320 A1 eine abnehmbare Staubauffangvorrichtung für eine Werkzeugmaschine beschrieben.

Die DE 10 2017 218 852 A1 offenbart einen Absauganschlussadapter für ein Sauggerät, wobei der Absauganschlussadapter eine Sensorvorrichtung aufweisen kann.

In der DE 10 2011 087 362 A1 wird eine Absaugvorrichtung und eine Steuerungsverfahren beschrieben, wobei die Absaugvorrichtung einen Drucksensor aufweist und ein Fehlersignal ausgegeben wird, wenn ein Unterschied des erfassten Drucks zum Umgebungsdruck geringer ist als ein Schwellwert.

Die Aufgabe, die der vorliegenden Erfindung zugrunde liegt, besteht darin, die vorstehend beschriebenen Mängel und Nachteile des Standes der Technik zu überwinden und eine Werkzeugmaschine, sowie ein Verfahren zu deren Betrieb bereitzustellen, mit denen der Nutzer der Werkzeugmaschine darin unterstütz werden kann, die Güte der Staubabsaugung sicherzustellen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Werkzeugmaschine vorgesehen, die zur Durchführung von Arbeiten mit einem Werkzeug verbindbar ist, wobei die Werkzeugmaschine eine Absaugvorrichtung zum Absaugen von Staub aufweist, der bei der Arbeit mit der Werkzeugmaschine entsteht. Die Werkzeugmaschine weist mindestens ein Mittel zur Ermittlung eines Volumenstroms durch die Absaugvorrichtung auf. Mit der Erfindung kann insbesondere eine Werkzeugmaschine mit integrierter Messung der Absaugleistung bereitgestellt werden, die es dem Nutzer ermöglicht, mit der Werkzeugmaschine effizient zu arbeiten und gleichzeitig die Güte der Staubabsaugung zu kontrollieren bzw. im Blick zu haben. Insbesondere kann mit der Erfindung eine Werkzeugmaschine mit Volumenstrommessung bereitgestellt werden. Dadurch wendet sich die Erfindung vom Stand der Technik ab, der regelmäßig vorschlägt eine solche Volumenstrommessung direkt im Sauggerät durchzuführen. Im Kontext der vorliegenden Erfindung ist die Werkzeugmaschine für sich allein betrachtet in der Lage, den Volumenstroms durch die Absaugvorrichtung zu erfassen. Dies stellt einen Vorteil gegenüber dem Stand der Technik dar, da die Werkzeugmaschine auf diese Weise den erfassten Volumenstrom mit einem Referenz-Volumenstrom, der für eine ausreichende Absaugung erforderlich ist, vergleich kann. Basierend auf diesem Vergleich kann dann ein Betriebsparameter der Werkzeugmaschine angepasst, d.h. verändert, oder beibehalten werden, um einen gewünschten Volumenstrom zu erhalten.

Es ist im Sinne der Erfindung bevorzugt, dass der Volumenstrom, der im Kontext der vorliegenden Erfindung gemessen wird, in der Einheit Liter pro Sekunde, d.h. L/s gemessen wird. Es kann aber im Sinne der Erfindung auch bevorzugt sein, dass der Volumenstrom in der Einheit Kubikmeter pro Stunde, d.h. m³/h gemessen und angegeben wird.

Es ist im Sinne der Erfindung bevorzugt, dass ein Zusammenhang besteht zwischen dem Unterdruck und dem Volumenstrom. Dieser Zusammenhang kann in einem Diagramm dargestellt werden, wobei der Unterdruck p in der Einheit Millibar (mbar) auf der x-Achse und der Volumenstrom in der Einheit Liter/Sekunde (L/s) auf der y-Achse aufgetragen werden kann. Die Arbeitspunkte der Werkzeugmaschine können dann vorzugsweise auf eine Kennlinie in diesem Volumenstrom/Unterdruck-Diagramm liegen. Beispielhafte Volumenströme können in einem Bereich zwischen 25 und 45 L/s liegen. Der Volumenstrom kann in Abhängigkeit von dem Unterdruck annähernd linear verlaufen, dies aber insbesondere dann, wenn die Strömung in der Werkzeugmaschine annähernd laminar verläuft. Vorzugsweise laufen sowohl die Kennlinien für den laminaren, als auch den turbulenten Bereich im Wesentlichen linear. Lediglich in einem Übergangsbereich zwischen dem laminaren und dem turbulenten Bereich kann es Knicke oder dergleichen geben. Idealerweise erfolgt die Messung des Volumenstroms daher in einem Bereich der Werkzeugmaschine, in dem die Kennlinien im Wesentlichen linear verläuft.

Es ist im Sinne der Erfindung bevorzugt, dass die Werkzeugmaschine eine Anschlussvorrichtung für ein Sauggerät aufweist, um den Staub, der bei der Arbeit mit der Werkzeugmaschine entsteht, abzusaugen. Eine solche Anschlussvorrichtung kann als Absaugstutzen bezeichnet werden. Zur Verbindung von Werkzeugmaschine und Sauggerät kann ein Saugschlauch verwendet werden, der mit Hilfe der Anschlussvorrichtung an der Werkzeugmaschine befestigt werden kann. Die Anschlussvorrichtung ist vorzugsweise Bestandteil der Werkzeugmaschine, wobei die Anschlussvorrichtung mit einem Gegenstück am Saugschlauch zusammenwirken kann, um eine Verbindung herzustellen. Um eine solche Verbindung herzustellen, sind beispielsweise Dreh- oder Bajonett-Verschlüsse bekannt, die vorzugsweise eine gewisse Dichtigkeit sicherstellen, aber dennoch gut lösbar sind.

Es ist im Sinne der Erfindung bevorzugt, dass das mindestens eine Mittel zur Ermittlung des Volumenstroms im Bereich der Anschlussvorrichtung für ein Sauggerät angeordnet vorliegt. Eine solche Anbringung kann insbesondere bei Werkzeugmaschinen mit kurzen Anschlussvorrichtungen bevorzugt sein.

Es ist im Sinne der Erfindung bevorzugt, dass der Volumenstrom bzw. seine Eigenschaften direkt oder indirekt ermittelt werden können. Beispielsweise kann der Volumenstrom direkt gemessen werden, und zwar mit Hilfe eines Flügelradanemometers und/oder mit Hilfe eines thermischen Anemometers.

Es kann im Sinne der Erfindung auch bevorzugt sein, den Volumenstrom indirekt zu bestimmen. Dabei werden von dem mindestens einen Mittel zur Ermittlung des Volumenstroms Daten erhoben bzw. Mess-Werte aufgenommen, die selbst nicht direkt der Volumenstrom sind. Dabei kann es sich um Druckwerte, Temperaturwerte oder Mess-Werte elektrischer Größen handeln. Die Werkzeugmaschine ist dann vorzugsweise dazu eingerichtet, den Volumenstrom aus diesen Mess-Werten abzuleiten. Dazu kann die Werkzeugmaschine beispielsweise eine Elektronik-Vorrichtung oder eine Steuer-Elektronik umfassen, die die ermittelten Messwerte auswerten kann, um einen Volumenstrom zu bestimmen. Dazu können die Roh-Messwerte, die von den Sensoren ermittelt werden, vorzugsweise auf geeignete Weise gefiltert und/oder aufbereitet werden.

Bei dem Betrieb der vorgeschlagenen Werkzeugmaschine können die Mess-Werte oder die Werte, die für den Volumenstrom abgeleitet werden, mit vorgegebenen Schwellwerten verglichen werden. Es ist im Sinne der Erfindung bevorzugt, dass diese vorgegebenen Schwellwerte variieren können, je nach Art der Werkzeugmaschine, der Absaugvorrichtung und/oder des verwendeten Sauggeräts. Mit anderen Worten können die Schwellwerte in Abhängigkeit von der Werkzeugmaschine, der Absaugvorrichtung und/oder des verwendeten Sauggeräts vorgegeben werden.

Vorzugsweise kann das mindestens eine Mittel zur Ermittlung des Volumenstroms an unterschiedlichen Ort angebracht werden, je nach Art der Werkzeugmaschine, der Absaugvorrichtung und/oder des verwendeten Sauggeräts. Mit anderen Worten kann der Ort für die Anbringung der mindestens einen Sensorvorrichtung in Abhängigkeit von der Werkzeugmaschine, der Absaugvorrichtung und/oder des verwendeten Sauggeräts ausgewählt werden.

Es ist im Sinne der Erfindung bevorzugt, dass das mindestens eine Mittel zur Ermittlung des Volumenstroms einen Drucksensor, einem Temperatursensor, einen Wegsensor, einen kapazitiven Sensor, einen induktiven Sensor und/oder einen Ultraschall-Sensor umfasst. Es ist im Sinne der Erfindung besonders bevorzugt, dass das mindestens eine Mittel zur Ermittlung des Volumenstroms als «Sensor» oder «Sensorvorrichtung» bezeichnet wird. Vorzugsweise weist die Werkzeugmaschine eine Sensorvorrichtung oder zwei Sensoren auf. Wenn die Sensoren beispielsweise als Drucksensoren ausgebildet sind, kann es im Sinne der Erfindung bevorzugt sein, eine Differenzdruckmessung durchzuführen. Das bedeutet im Sinne der Erfindung bevorzugt, dass die Sensoren an unterschiedlichen Stellen der Absaugvorrichtung bzw. der Werkzeugmaschine angeordnet vorliegen können, wobei an jeder Sensorposition ein Druckwert ermittelt wird. Die Werkzeugmaschine kann eine Elektronik oder Steuerelektronik umfassen, um diese Druckwerte auszuwerten und einen Differenzdruck zu bestimmen. Vorzugsweise gibt der so erhaltene Differenzdruckwert die Druckdifferenz zwischen den Druckwerten an den beiden unterschiedlichen Sensorpositionen der Absaugvorrichtung bzw. der Werkzeugmaschine an. Analog dazu können an unterschiedlichen Orten der Absaugvorrichtung bzw. der Werkzeugmaschine Temperatursensoren vorgesehen sein, wobei die Werkzeugmaschine dazu ausgebildet sein kann, eine Temperaturdifferenz zwischen den beiden Sensorpositionen zu ermitteln und weiter auszuwerten.

Es kann im Sinne der Erfindung auch bevorzugt sein, dass die Sensoren als Weg- oder Streckensensoren ausgebildet sind, mit denen ein Wegunterschied an der Absaugvorrichtung ermittelt werden kann. Es kann sein, dass sich die Absaugvorrichtung durch die Staub-Absaugung und den damit verbundenen Unterdruck zumindest partiell zusammenzieht, so dass die unterschiedlichen Dimensionen, Durchmesser oder Volumina der Absaugvorrichtung als Mass oder indikator für den (Unter-)Druck in der Absaugvorrichtung verwendet werden können. Vorzugsweise können aus der Stärke des Zusammenziehens der Absaugvorrichtung Rückschlüsse über den (Unter-)Druck in der Absaugvorrichtung gezogen werden. Beispielsweise kann die Absaugvorrichtung einen als Membran ausgebildeten bevorzugt flexiblen Bereich umfassen, der dafür vorgesehen ist, dass der bevorzugt flexible Bereich durch Zusammenziehen auf die Anwendung eines (Unter-)Drucks reagiert. Vorzugsweise kann im Bereich dieses Bereichs das mindestens eine Mittel zur Ermittlung des Volumenstroms angeordnet vorliegen, um die Ausdehnung bzw. die Kontraktion des als Membran ausgebildeten bevorzugt flexiblen Bereichs zu ermitteln. Insbesondere können im Bereich der Membran zwei Sensoren angeordnet vorliegen, um eine solche Weg- oder Streckenmessung und einen entsprechenden Vergleich der Messwerte vorzunehmen. Indem das Maß bzw. die Stärke des Zusammenziehens des Membran-Bereichs ausgewertet wird, können Rückschlüsse auf den Unterdruck und dadurch auch auf den Volumenstrom gezogen werden. Ein starkes Zusammenziehen des Membranbereichs kann beispielsweise als starker Unterdruck gedeutet werden, während ein geringes Zusammenziehen des Membranbereichs als schwacher Unterdruck innerhalb der Absaugvorrichtung gedeutet werden kann. Der Fachmann weiß, dass die Geschwindigkeit und der Druck in einem Rohr oder einem Saugkanal, wie beispielsweise der Absaugvorrichtung, über das Gesetzt von Bernoulli miteinander zusammenhängen. Es ist im Sinne der Erfindung bevorzugt, dass der Volumenstrom aus der Luftgeschwindigkeit des Saugstroms zur Absaugung des Staubs, der bei der Arbeit mit der Werkzeugmaschine anfällt, abgeleitet werden kann.

Es ist im Sinne der Erfindung ganz besonders bevorzugt, dass es sich bei dem mindestens einen Mittel zur Ermittlung des Volumenstroms um einen Ultraschall-Sensor handelt oder dass das mindestens einen Mittel zur Ermittlung des Volumenstroms einen Ultraschall-Sensor umfasst. Es hat sich gezeigt, dass Ultraschall-Sensoren wasserfest abgekapselt werden können, so dass ein Ultraschall-Sensor beispielsweise besonders gut dann verwendet werden kann, wenn es sich bei dem Sauggerät um einen Nass- oder um einen Nass-Trockensauger handelt, bei denen die Gefahr besteht, dass Flüssigkeit mit dem Mittel zur Ermittlung des Volumenstroms in Berührung kommt.

Bei der Verwendung von Ultraschall-Sensoren kann beispielsweise der Laufzeitunterschied ausgesandter Wellen ausgewertet werden. Dabei wird insbesondere der Unterschied der Laufzeiten der ausgesandten Ultraschallwellen erfasst, die mit oder gegen die Strömungsrichtung laufen. Eine Schallwelle, die sich in Strömungsrichtung bewegt, bewegt sich in der Regel schneller als eine Schallwelle, die sich entgegen der Strömungsrichtung bewegt. Aus der Differenz der Laufzeiten, die im Sinne der Erfindung als Δt bezeichnet wird, kann dann vorteilhafterweise die Strömungsgeschwindigkeit berechnet werden. Beispielsweise können ein erster Detektor und ein zweiter Detektor verwendet werden, die im Kontext des Ultraschall-Messverfahrens jeweils jeweils Sender und Empfänger darstellen bzw. deren Rollen übernehmen. Die Sensoren können beispielsweise an gegenüberliegenden Wänden bzw. Seiten eines Strömungskanals angeordnet sein, vorzugsweise um eine Strecke Δs versetzt. Die Strecke zwischen den Detektoren kann vorzugsweise als Wegstrecke L bezeichnet werden, wobei die Wegstrecke L mit den Wänden des Strömungskanals einen Winkel alpha einschließen kann. Auf diese Weise kann insbesondere eine kostengünstige Erfassungsmethode für den Volumenstrom bereitgestellt werden. Es hat sich gezeigt, dass die Detektoren besonders gut vor Schmutz geschützt werden können, weil der Winkel alpha sehr frei gewählt werden kann.

Die Detektoren können auch auf der gleichen Wand oder Seite des Strömungskanals angeordnet vorliegen, wobei die ausgesandten Wellen dann von der gegenüberliegenden Wand reflektiert werden. Darüber hinaus kann der Ultraschall auch ein- oder mehrmals von der Wand reflektiert werden. Dies ist insbesondere dann bevorzugt, wenn der Strömungskanal, in dem die Messung des Volumenstroms durch-geführt wird, vergleichsweise dünn ist. Auch in diesem Ausführungsbeispiel der Erfindung ist es bevorzugt, dass die Detektoren auf derselben Seite oder Wand des Strömungskanals angeordnet vorliegen. Die ausgesandten Wellen können dann einmal oder mehrmals von der Wänden des Strömungskanals hin- und herreflektiert werden, bevor die Wellen von einem der Detektoren erfasst und ausgewertet werden.

In einer alternativen Ausgestaltung der Erfindung können die Detektoren auf gegenüberliegenden Seiten bzw. Wänden des Strömungskanals angeordnet vorliegen und im Wesentlichen senkrecht zur Strömung platziert sein. Der Ultraschallpuls «verweht» werden, wobei dieser Effekt vorzugsweise abhängig von der Strömungsgeschwindigkeit ist. In dieser Ausgestaltung der Erfindung kann der erste Detektor als Sender und der zweite Detektor als Empfänger ausgebildet sein. Auf diese Weise ist diese Ausgestaltung der Erfindung besonders kostengünstig, da besonders einfache Detektoren verwendet werden können.

Es kann im Sinne der Erfindung auch bevorzugt sein, dass zwei Detektoren im Wesentlichen senkrecht zur Strömung, aber entlang der Strömung «hintereinander» angeordnet vorliegen. In dieser Ausgestaltung der Erfindung kann der erste Detektor dazu eingerichtet sein, Ultraschallwellen zu senden und zu empfangen. Es ist im Sinne der Erfindung besonders bevorzugt, dass der erste Detektor im Wesentlichen kontinuierlich Wellen empfängt und diese aufzeichnet. Der zweite Detektor ist vozugsweise dazu eingerichtet, Wellen zu senden und zu empfangen, wobei auch der zweite Detektor dazu eingerichtet ist, dass die Wellen im Wesentlichen kontinuierlich empfangen und aufgezeichnet werden. Fliegt ein Partikel durch den ersten Detektor und anschließend durch den zweiten Detektor, tritt ein Peak im empfangenen Signal auf, wobei dieser Peak vorzugsweise zunächst im Signal des ersten Detektors auftritt und anschließend im Signal des zweiten Detektors. Die Peaks können - beispielsweise mit Hilfe von Kreuzkorrelation - in den beiden Signalen identifiziert werden, so dass die Laufzeitdifferenz Δt ermittelt werden kann. Dieses Verfahren ist besonders dann bevorzugt, wenn eine Vielzahl von Partikeln in der zu untersuchenden Strömung enthalten sind. Diese Situation liegt im Kontext der vorliegenden Erfindung insbesondere dann vor, wenn mit der vorgeschlagenen Werkzeugmaschine gearbeitet wird, d.h. wenn sie in Betrieb ist.

Es ist im Sinne der Erfindung bevorzugt, dass die Frequenzen der elektromagnetischen Wellen, die mit den Detektoren detektiert werden, in einem Bereich von 20 Kilo-Hertz (kHz) bis 1 GigaHertz (GHz) und damit im Bereich des Ultraschalls liegen. Vorzugsweise kann die Frequenz in Abhängigkeit davon ausgewählt werden, dass eine möglichst gute Durchdringung bei einer gleichzeitig guten zeitlichen und/oder örtlichen Auflösung erreicht wird. Nachdem eine gute Durchdringung eher bei vergleichsweise geringen Frequenzen und eine gute Auflösung eher bei vergleichsweise hohen Frequenzen erreicht wird, haben sich Frequenzen in einem Bereich von 100 kHz bis 1 Mega-Hertz (MHz) als besonders geeignet erwiesen.

Wenn die Werkzeugmaschine, bei der der Volumenstrom bestimmt werden soll, beispielsweise ein Meißelgerät ist, können die Werkzeugmaschine und der Meißel als Werkzeug vorzugsweise parallel zueinander verlaufen, insbesondere entlang einer gemeinsamen zentralen Achse der Werkzeugmaschine. Der Anschluss zum Anschließen einer Saugvorrichtung kann vorzugsweise in einem vergleichsweise flachen Winkel zu dieser zentralen Achse abgehen bzw. einen vergleichsweise flachen Winkel mit der zentralen Achse einschließen. Die Detektoren, die das Mittel zur Bestimmung des Volumenstroms bilden, können dann beispielsweise im Übergangsbereich zwischen Werkzeugmaschine und Saugeranschluss angeordnet vorliegen, vorzugsweise auf derselben Innenseite des Saugeranschlusses. Die von dem ersten Detektor ausgesandeten elektromagnetischen bzw. Ultraschallwellen können dann von der gegenüberliegenden Wand des Saugeranschlusses reflektiert und von dem zweiten Detektor detektiert werden.

Wenn die Werkzeugmaschine, bei der der Volumenstrom bestimmt werden soll, beispielsweise ein Trennschleifer ist, dessen Trennscheibe aufrecht in einen zu schneidenden Untergrund eingreift, kann der Saugeranschluss auf einer Oberseite der Trennscheibe angeordnet vorliegen. Wenn die Trennscheibe beispielsweise von einer Staub- oder Schutzhaube umgeben ist, kann der Saugeranschluss beispielsweise zwischen 2 und 3 Uhr angeordnet vorliegen, wenn der oberste Punkte der Trennscheibe bzw. der Schutzhaube als 12 Uhr einer mechanischen Uhr definiert wird. In Bezug auf eine Arbeitsrichtung «nach vorne» liegt der Saugeranschluss in dieser Ausgestaltung der Erfindung bevorzugt vor der Trennscheibe vor, wobei der Saugeranschluss bevorzugt tangential oder im Wesentlichen tangential zu der Trennscheibe der Werkzeugmaschine verläuft. Die Detektoren, die das Mittel zur Bestimmung des Volumenstroms bilden, können dann beispielsweise zwischen 1 und 2 Uhr auf dem gedachten Zifferblatt der mechanischen Uhr angeordnet vorliegen. Auch in dieser Ausgestaltung der Erfindung können die Detektoren vorzugsweise auf derselben Seite bzw. an derselben Wand des Saugeranschlusses angeordnet vorliegen, wobei die elektromagnetischen Wellen zwischen den gegenüberliegenden Wänden des Saugeranschlusses hin- und herrefelektiert werden können.

Die Verwendung eines Erfassungsmittels, das nicht auf der Erfassung von Absolutdruckwerten basiert, hat sich im Kontext der Erfindung als vorteilhaft erwiesen, das die Auswertung von Absolutdruckwerten häufig aufwändig und fehlerhaft ist. Zum einen sind in der Regel mindestens zwei Drucksensoren erforderlich, um mit den erfassten Werten eine Güte oder Qualität der Absaugung zu bestimmen. Zum anderen können Situationen auftreten, in denen selbst die Verwendung von zwei Sensoren keine eindeutige Beurteilung der Qualität der Absaugung zulässt. Daher sind im Sinne der Erfindung insbesondere solche Erfassungsmittel bevorzugt, die nicht auf der Erfassung von Absolutdruckwerten beruhen. Solche Erfassungsmittel können beispielsweise Ultraschall-Sensoren, Weg- oder Streckensensoren, Temperatursensoren, induktive oder kapazitive Sensoren, Relativdrucksensoren und/oder Differenzdrucksensoren sein, ohne darauf beschränkt zu sein.

Es ist im Sinne der Erfindung bevorzugt, dass das mindestens eine Mittel zur Ermittlung des Volumenstroms an einer strömungstechnisch günstigen Stelle angeordnet vorliegt. Die Formulierung «strömungstechnisch günstig» stellt für den Fachmann keinen unklaren Begriff dar, weil der Fachmann weiß, dass die Position des mindestens einen Mittels zur Ermittlung des Volumenstroms vorzugsweise einen Kompromiss in Bezug auf folgenden Zielkonflikt darstellt: Zum einen ist es im Sinne der Erfindung bevorzugt, das mindestens eine Mittel zur Ermittlung des Volumenstroms nicht zu nahe an dem Ort der Stauberzeugung anzuordnen, weil am Ort der Stauberzeugung große Schwankungen der Geschwindigkeit der Luft durch das An- oder Absetzen des Werkzeugs der Werkzeugmaschine auftreten können. Dementsprechend können Messwerte, die am Ort der Stauberzeugung ermittelt werden, fehlerbehaftet oder hohen Schwankungen ausgesetzt sein. Zum anderen ist es im Sinne der Erfindung bevorzugt, das mindestens eine Mittel zur Ermittlung des Volumenstroms nicht zu nahe an einer Anschlussvorrichtung für ein Sauggerät anzuordnen, weil die Messwerte auch hier fehlerbehaftet sein können. Außerdem kann das Sauggerät fehlerhaft an der Anschlussvorrichtung angebracht werden, so dass grundsätzlich "falsche" Werte gemessen werden.

Es ist im Sinne der Erfindung bevorzugt, das mindestens eine Mittel zur Ermittlung des Volumenstroms strömungstechnisch zwischen dem Ort der Stauberzeugung und der Anschlussvorrichtung für ein Sauggerät anzuordnen, um die Fehlerquellen, die mit einer zu nahen Positionierung an dem Ort der Stauberzeugung und/oder der Anschlussvorrichtung einhergehen können, minimiert werden. Vorzugsweise kann das mindestens eine Mittel zur Ermittlung des Volumenstroms an unterschiedlichen Ort angebracht werden, je nach Art der Werkzeugmaschine, der Absaugvorrichtung und/oder des verwendeten Sauggeräts. Mit anderen Worten kann der Ort für die Anbringung der mindestens einen Sensorvorrichtung in Abhängigkeit von der Werkzeugmaschine, der Absaugvorrichtung und/oder des verwendeten Sauggeräts ausgewählt werden. Beispielsweise kann der mindestens eine Sensor bei Werkzeugmaschinen mit vergleichsweise kurzen Absaugstutzen vergleichsweise nahe an der Anschlussvorrichtung angebracht werden. Bei anderen Werkzeugmaschinen bzw. Typen von Werkzeugmaschinen kann die Absaugvorrichtung und/oder die Anschlussvorrichtung so ausgebildet sein, dass sich eine geeignete Mess-Strecke ausbildet, die zur Vorsehung bzw. Anbringung des mindestens einen Sensors besonders gut geeignet ist. Bei diesen Werkzeugmaschinen kann beispielsweise ein erster Sensor zu Beginn und ein zweiter Sensor am Ende der Mess-Strecke vorgesehen sein, um beispielsweise eine Druck- oder Temperaturdifferenz zu ermitteln. Es hat sich gezeigt, dass solche Werkzeugmaschinen mit einer vergleichsweise langen, ruhigen Mess-Strecke gut mit allen denkbaren Sensor-Typen kombiniert werden können. Mit anderen Worten können Werkzeugmaschinen mit einer vergleichsweise langen, ruhigen Mess-Strecke in Verbindung mit Drucksensoren, Temperatursensoren, Wegsensoren, kapazitiven Sensoren, einen induktiven Sensor und/oder Ultraschall-Sensoren zusammen verwendet werden, um den Volumenstrom innerhalb der Absaugvorrichtung der Werkzeugmaschine zu ermitteln.

Dazu können die Messwerte, die zur Ermittlung des Volumenstroms benötigt werden, vorzugsweise längs, d.h. entlang einer Mess-Strecke, und/oder quer zu der Mess-Strecke ermittelt werden. Mit anderen Worten ist es im Sinne der Erfindung bevorzugt, dass das mindestens eine Mittel zur Ermittlung des Volumenstroms so angeordnet wird, dass eine Messrichtung für den Volumenstrom längs und/oder quer in der Absaugvorrichtung angeordnet ist. Wenn die Messrichtung für den Volumenstrom längs in der Absaugvorrichtung angeordnet ist, können die Messwerte, die zur Ermittlung des Volumenstroms benötigt werden, längs, d.h. entlang der Mess-Strecke, ermittelt werden. In dieser Ausgestaltung der Erfindung können eine Achse entlang der Messrichtung und eine Zentralachse, die vorzugsweise mittig durch die Absaugvorrichtung verläuft, zusammenfallen oder im Wesentlichen zusammenfallen. Das bedeutet im Sinne der Erfindung bevorzugt, dass die Achse entlang der Messrichtung und die Zentralachse durch die Absaugvorrichtung parallel oder im Wesentlichen parallel zueinander verlaufen; mithin können die genannten Achsen kollinear ausgebildet sein.

Es kann im Sinne der Erfindung auch bevorzugt, dass das mindestens eine Mittel zur Ermittlung des Volumenstroms so angeordnet vorliegt, dass eine Messrichtung für den Volumenstrom quer in der Absaugvorrichtung angeordnet ist. Wenn die Messrichtung für den Volumenstrom quer in der Absaugvorrichtung angeordnet ist, können die Messwerte, die zur Ermittlung des Volumenstroms benötigt werden, quer, d.h. senkrecht oder im Wesentlichen senkrecht zu der Mess-Strecke, ermittelt werden. In dieser Ausgestaltung der Erfindung können eine Achse entlang der Messrichtung und eine Zentralachse, die vorzugsweise mittig durch die Absaugvorrichtung verläuft, senkrecht oder im Wesentlichen senkrecht zueinander ausgebildet sein. Das bedeutet im Sinne der Erfindung bevorzugt, dass die Achse entlang der Messrichtung und die Zentralachse durch die Absaugvorrichtung einen rechten oder im Wesentlichen rechten Winkel miteinander einschließen, so dass der eingeschlossene Winkel in einem Bereich von ca. 90 Grad liegt. Selbstverständlich sind auch alle anderen Ausrichtungen und/oder Orientierungen der Messrichtungen zur Ermittlung des Volumenstroms in der Absaugvorrichtung bevorzugt. Beispielsweise können die Winkel zwischen der Messrichtung und einer Zentralachse durch die Absaugvorrichtung in einem Bereich von 0 bis 90 Grad liegen, ohne darauf beschränkt zu sein.

Bei der Absaugvorrichtung kann es sich - wie in der Figur gezeigt - um ein Absaugrohr handeln, das über ein Werkzeug der Werkzeugmaschine gestülpt werden kann. Diese Ausgestaltung der Absaugvorrichtung ist besonders bevorzugt für Werkzeugmaschinen mit länglichen Werkzeugen, wie Bohrmaschinen, Bohrhämmern, Meißelgeräten oder dergleichen. Beispielsweise kann ein Bohrhammer ein solches Absaugrohr umfassen, das wie ein flexibler Rüssel ausgestaltet sein kann. In einem solchen Absaugrohr kann der Volumenstrom bzw. der Druck durch Vermessen des Zusammenziehens der flexiblen Bestandteile oder Komponenten des Absaugrohrs bestimmt werden. Beispielsweise kann sich das Absaugrohr aufgrund seiner flexiblen Ausgestaltung bei Beaufschlagung mit einem Unterdruck zusammenziehen, wobei der Unterschied zwischen dem Durchmesser des mit Unterdruck beaufschlagten Absaugrohrs und dem Durchmesser des unbeaufschlagten Absaugrohrs zur Ermittlung des Drucks in dem Absaugrohr verwendet werden kann.

Insbesondere dann, wenn am Ort der Messung durch die Sensoren vergleichsweise viel Metall, wie Stahl, zugegen ist, kann es im Sinne der Erfindung bevorzugt sein, mechanische oder thermische Mess-Methoden, wie Druck, Temperatur oder Wege, zu verwenden, da «elektrische» Mess-Methoden, wie induktive oder kapazitive Mess-Methoden, durch das umliegende Metall zu ggf. zu verzerrten oder fehlerbehafteten Mess-Werten führen können.

Es gibt aber auch Werkzeugmaschinen, die als Werkzeug ein scheibenförmiges Werkzeug aufweisen. Dabei kann es sich um Winkel- oder Trennschleifer handeln. Solche Winkel- oder Trennschleifer verfügen häufig über eine sog. Staub- oder Schutzhaube, die einerseits einen Absaugraum für die Absaugung des Staubs bildet, der bei der Arbeit mit der Werkzeugmaschine entsteht. Andererseits schützen solche Staub- oder Schutzhauben den Nutzer der Werkzeugmaschine vor herumfliegenden Partikeln oder Funken. Es ist im Sinne der Erfindung bevorzugt, dass sowohl solche Schutz- und Staubhauben, also auch Absaugrohre für Werkzeugmaschinen mit länglichen Werkzeugen «Absaugvorrichtungen» im Sinne der Erfindung darstellen können. Wenn bei solchen Schutz- und Staubhauben längere Abschnitte vorgesehen sind, in denen eine ruhige Strömung des Absaugstroms zu erwarten ist, kann dieser längere Abschnitt der Schutz- und Staubhaube als Mess-Strecke für die Ermittlung des Volumenstroms innerhalb der Absaugvorrichtung verwendet werden. Ein solcher längerer Abschnitt kann im Sinne der Erfindung bevorzugt als «Saugkanal» bezeichnet werden. Es ist im Sinne der Erfindung bevorzugt, dass sich ein solcher Saugkanal zwischen dem bevorzugt scheibenförmigen Werkzeug und der Schutz- und Staubhaube ausbildet.

Beispielsweise kann ein Trennschleifer bevorzugt ein scheibenförmiges Werkzeug aufweisen, dass aufrecht steht. Das bedeutet im Sinne der Erfindung bevorzugt, dass die Ebene, die von dem bevorzugt scheibenförmigen Werkzeug einer solchen Werkzeugmaschine aufgespannt wird, zusammenfällt oder parallel zu einer Zentral- oder Längsebene der Werkzeugmaschine verläuft. Wenn sich bei einer solchen Werkzeugmaschine ein Saugkanal zwischen dem Werkzeug und der Schutz- und Staubhaube ausgebildet, kann es im Sinne der Erfindung bevorzugt sein, dass der Saugkanal oberhalb des bevorzugt scheibenförmigen Werkzeugs verläuft. Auf einer solchen Oberseite des bevorzugt scheibenförmigen Werkzeugs kann der Saugkanal einen längeren Abschnitt aufweisen, der als Mess-Strecke für die Ermittlung des Volumenstroms innerhalb der Absaugvorrichtung verwendet werden kann. Eine solche Mess-Strecke kann beispielsweise auch für Kreissägen oder andere Sägen mit «aufrechtem» Werkzeug bevorzugt sein. Solche Mess-Strecken können insbesondere gut mit kapazitiven und/oder induktiven Messungen Ermittlung des Volumenstroms kombiniert werden. Auch Ultraschall-Messungen können in einem solchen Setup bevorzugt sein. Bei der Verwendung eines Ultraschallsensors ist es im Sinne der Erfindung besonders bevorzugt, dass die Ermittlung des Volumenstroms möglichst mittig in einer solchen Mess-Strecke der Absaugvorrichtung erfolgt bzw. vorgenommen wird.

In einem zweiten Aspekt betrifft die Erfindung ein Verfahren zum Betrieb einer Werkzeugmaschine. Die für die Werkzeugmaschine eingeführten Begriffe, Definitionen und technischen Vorteile gelten vorzugsweise für das Betriebsverfahren für die Werkzeugmaschine analog. Das Betriebsverfahren ist durch folgende Verfahrensschritte gekennzeichnet:
a) Betrieb der Werkzeugmaschine,
b) Absaugung von Staub, der bei der Arbeit mit der Werkzeugmaschine entsteht, durch eine Absaugvorrichtung,
c) Ermittlung des Volumenstroms durch die Absaugvorrichtung durch mindestens ein Mittel zur Ermittlung des Volumenstroms,
d) Vergleich eines Messwerts für den Volumenstrom mit mindestens einem vorgegebenem Schwellwert,
e) Ausgabe eines Warnsignals, wenn der Messwert für den Volumenstrom von dem vorgegebenen Schwellwert abweicht.

Es ist im Sinne der Erfindung bevorzugt, dass ein Verfahren, das die Verfahrensschritte a) - c) umfasst, ein Verfahren zur Ermittlung eines Volumenstroms durch die Absaugvorrichtung einer Werkzeugmaschine darstellt. Durch den Vergleich der Volumenstromwerte mit vorgegebenen Schwellwerten und durch die Ausgabe des Warnsignals wird aus dem Verfahren zur Ermittlung eines Volumenstroms ein Verfahren zum Betrieb einer Werkzeugmaschine, mit dem der Nutzer wirkungsvoll vor einer schwächer werdenden Staubabsaugung gewarnt werden kann. Eine solche Warnung kann zulassungsseitig gefordert sein oder eine wirkungsvolle Unterstützung für den Nutzer darstellen. Dadurch kann einerseits sichergestellt werden, dass der Nutzer nicht einer zu großen Staubexposition ausgesetzt wird. Zum anderen kann mit der Erfindung erreicht werden, dass der zu bearbeitende Untergrund ausreichend sauber und gereinigt hinterlassen wird. Dies kann beispielsweise dann relevant sein, wenn in ein Bohrloch ein mechanischer und/oder chemischer Anker eingebracht werden soll, der nur unzureichend halten würde, wenn sich in dem Bohrloch größere Mengen Bohrstaub befinden. Um eine solche Situation zu vermeiden und eine optimale Absaugung des Arbeitsorts und/oder der Umgebung der Werkzeugmaschine zu gewährleisten, ist erfindungsgemäß die Ausgabe eines Warnsignals vorgesehen, wenn der Messwert für den Volumenstrom von dem vorgegebenen Schwellwert abweicht, insbesondere unterschritten wird. Der Nutzer kann dann entsprechende Maßnahmen ergreifen, wie beispielsweise den Filter des Sauggeräts abreinigen, den Filter des Sauggeräts wechseln, eine Batterie des Sauggeräts aufladen usw.

Es ist im Sinne der Erfindung bevorzugt, dass ein Warnsignal insbesondere dann ausgegeben wird, wenn der Messwert für den Volumenstrom deutlich von dem vorgegebenen Schwellwert abweicht. Eine Abweichung kann beispielsweise in einem Überschreiten oder einem Unterschreiten des vorgegebenen Messwerts bestehen, wobei eine deutliche Abweichung im Sinne der Erfindung dadurch definiert wird, dass der von dem Mittel zur Ermittlung des Volumenstroms ermittelte Volumenstrom-Messwert mehr als 25 % von dem vorgegebenen Schwellwert abweicht. Wenn der vorgegebene Schwellwert beispielsweise bei einem Wert von 40 L/s liegt, würde eine deutliche Abweichung bei Messwerten von weniger als 30 L/s oder mehr als 50 L/s beginnen. Diese Angaben sind als Richtwerte zu verstehen, wobei es selbstverständlich auch Anwendungsfälle geben kann, in denen diese Werte abweichen können.

Es ist im Sinne der Erfindung bevorzugt, dass bei einer Abweichung des erfassten Volumenstromwerts nach unten, d.h. bei zu niedrigen Volumenströmen, ein Signal ausgegeben wird, um den Nutzer der Werkzeugmaschine auf diesen niedrigen Volumenstrom hinzuweisen. Es können darüber hinaus automatisch Massnahmen ergriffen werden, um den Volumenstrom zu erhöhen.

Beispielsweise kann eine Leistung des Motors der Werkzeugmaschine reduziert werden, um die Abbauleistung der Werkzeugmaschine und dadurch auch die Staubproduktion zu verringern. Dadurch kann die Filterabreinigung der Saugvorrichtung besser in die Lage versetzt werden, eine wirksame Filterabreinigung durchzuführen, so dass der Volumenstrom vorteilhafterweise wieder erhöht werden kann.

In einem weiteren Beispiel kann die Werkzeugmaschine bei zu geringem Volumenstrom ausgeschaltet werden. Dies könnte als automatische Maßnahme beispielsweise dann durchgeführt werden, wenn ein Schwellwert für eine bestimmte Zeit unterschritten, d.h. nicht erreicht, wird, obwohl die Werkzeugmaschine bereits mit geringerer Leistung betrieben wird, so dass weniger Staub produziert wird. Alternativ oder ergänzend kann die Werkzeugmaschine dann ausgeschaltet werden, wenn ein zweiter Schwellwert, der vorzugsweise geringer als der erste Schwellwert ist, für eine bestimmte Zeit ebenfalls unterschritten wird.

Wenn Abweichungen des erfassten Volumenstromwerts nach oben, d.h. sehr große Volumenströme, erfasst werden, kann ebenfalls ein Signal ausgegeben werden, dass beispielsweise auf einen erhöhten Energieverbrauch und/oder eine erhöhte Lautstärke des Saugers hinweist.

Bei dem Warnsignal kann es sich vorzugsweise um ein optisches, akustisches, haptisches oder sonstiges Warnsignal handeln. Zur Ausgabe eines optischen Warnsignals kann die Werkzeugmaschine beispielsweise eine Leuchtdiode (Light Emitting Diode, LED) umfassen, die in Abständen blinken kann oder die Licht in unterschiedlichen Farben, d.h. mit unterschiedlichen Wellenlängen, abgeben kann. Je nach Blink-Frequenz oder Lichtfarbe kann der Nutzer der Werkzeugmaschine dann unterschiedliche Maßnahmen zur Wiederherstellung des gewünschten Volumenstroms ergreifen, um eine optimale Absaugung von Staub von der Arbeitsstelle der Werkzeugmaschine oder aus der Umgebung der Werkzeugmaschine zu veranlassen. Es ist im Sinne der Erfindung bevorzugt, dass die Leuchtdiode als mögliches Ausgabemittel des Warnsignals für den Nutzer gut einsehbar an der Werkzeugmaschine angebracht ist. Alternativ oder ergänzend kann die Werkzeugmaschine einen Lautsprecher zur Ausgabe eines akustischen Warnsignals umfassen oder ein Ausgabemittel für haptische oder sonstige Warnsignale.

Insbesondere bei besonders starken Abweichungen des Volumenstroms von den vorgegebenen Messwerten kann die Werkzeugmaschine ausgeschaltet werden, wenn der Messwert für den Volumenstrom von dem vorgegebenen Schwellwert nach oben oder nach unten abweicht. Dadurch kann der Nutzer der Werkzeugmaschine besonders wirkungsvoll vor einer zu staubbeladenen Umgebung geschützt werden.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:

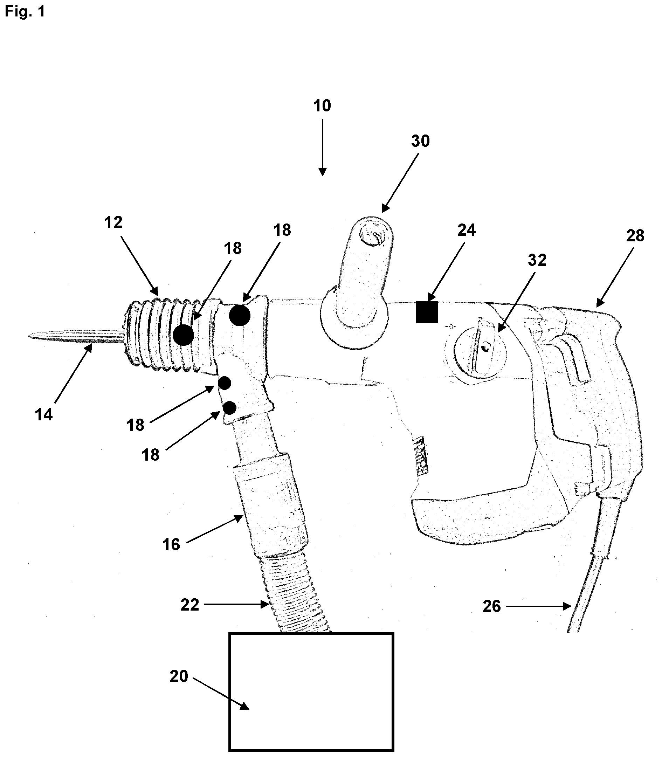

- Fig. 1: Ansicht einer bevorzugten Ausgestaltung der Werkzeugmaschine

### Ausführungsbeispiele und Figurenbeschreibung:

Figur 1 zeigt eine bevorzugte Ausgestaltung der Werkzeugmaschine 10. Die Werkzeugmaschine 10 weist ein längliches Werkzeug 14 auf, das in Figur 1 von der Absaugvorrichtung 12 verdeckt wird. Die Absaugvorrichtung 12 ist als Absaugrohr ausgebildet, wobei ein solches Absaugrohr als flexibler Rüssel ausgebildet sein kann oder flexibel ausgebildete Bereiche aufweisen kann. Beispielsweise kann die rohrartig ausgebildete Absaugvorrichtung 12 bevorzugt flexibel ausgebildete Membran-Bereiche umfassen, die sich je nach Druck innerhalb der Absaugvorrichtung 12 zusammenziehen oder expandieren können. Die Erfindung soll aber auch solche Absaugvorrichtungen 12 umfassen, die aus Schutz- oder Staubhauben ausgebildet sind. Solche haubenartigen Absaugvorrichtungen werden insbesondere im Bereich der Werkzeugmaschinen mit scheibenförmigen Werkzeugen verwendet, d.h. beispielsweise bei Trenn- oder Winkelschleifern.

Gemäß der Erfindung wird der Volumenstrom innerhalb der Absaugvorrichtung 12 der Werkzeugmaschine 10 ermittelt. Dazu umfasst die Werkzeugmaschine 10 mindestens ein Mittel 18 zur Ermittlung dieses Volumenstroms. Das mindestens eine Mittel 18 zur Ermittlung dieses Volumenstroms kann von verschiedenen Sensoren gebildet werden oder verschiedene Sensoren umfassen. Wenn die Werkzeugmaschine 10 mehr als ein Mittel 18 zur Ermittlung des Volumenstroms umfasst, kann es sich beispielsweise um zwei oder mehrere gleichartige Sensoren handeln. Beispielsweise können zwei oder mehr Sensoren verwendet werden, um eine Druckdifferenz zwischen zwei unterschiedlichen Mess-Stellen der Werkzeugmaschine 10 bzw. der Absaugvorrichtung 12 zu ermitteln. Alternativ können zwei oder mehr Sensoren verwendet werden, um eine Temperaturdifferenz zwischen zwei unterschiedlichen Mess-Stellen der Werkzeugmaschine 10 bzw. der Absaugvorrichtung 12 zu ermitteln. Es ist im Sinne der Erfindung bevorzugt, dass das mindestens eine Mittel 18 zur Ermittlung des Volumenstroms an einer strömungstechnisch günstigen Stelle der Absaugvorrichtung 12 angeordnet vorliegt. An dieser strömungstechnisch günstigen Stelle sollte vorzugsweise ein längerer Abschnitt mit ruhigen Strömungsbedingungen vorliegen, um reproduzierbare und verläßliche Daten zu erhalten. Insbesondere sollten an den jeweiligen Mess-Stellen keine großen Schwankungen hinsichtlich der relevanten Eigenschaften des Saugstroms vorhanden sein. Insbesondere sind in Figur 1 mehrere mögliche mögliche Positionen für die Mittel 18 zur Ermittlung des Volumenstroms dargestellt.

Der Saugstrom wird vorzugsweise von einem Sauggerät 20 erzeugt, mit dem die Werkzeugmaschine 10 verbunden werden kann. Die Verbindung zwischen Sauggerät 20 auf der einen Seite und Werkzeugmaschine 10 auf der anderen Seite kann insbesondere von einem Saugschlauch 22 gebildet werden, der mittels einer Anschlussvorrichtung 16 an der Werkzeugmaschine 10 angebracht werden kann. Beispielsweise kann ein Verschluß zwischen der Anschlussvorrichtung 16 und der Werkzeugmaschine 10 durch eine Dreh- oder Bajonett-Verbindung hergestellt werden. Das Sauggerät 20 umfasst vorzugsweise eine Turbine oder einen Motor (nicht dargestellt), so dass im Inneren des Sauggeräts 20 ein Unterdruck erzeugt werden kann. Dieser Unterdruck kann mittels dem Saugschlauch 22 und durch die Anschlussvorrichtung 16 in die Absaugvorrichtung 12 der Werkzeugmaschine 10 übertragen werden. Es ist im Sinne der Erfindung ganz besonders bevorzugt, dass der von dem Sauggerät 20 erzeugte Unterdruck dafür verwendet wird, einen Saugstrom zu erzeugen und Staub aufzusaugen. Vorzugsweise kann der Staub direkt in der Nähe des Arbeitsorts aufgesaugt werden, also dort, wo das Werkzeug 14 der Werkzeugmaschine 10 den zu bearbeitenden Untergrund berührt. Wenn die Werkzeugmaschine 10 als dazu ausgebildet ist, Löcher in einen Untergrund einzubringen, kann die Absaugvorrichtung 12 beispielsweise sicherstellen, dass das Bohrloch nach Beendigung der Arbeit ausgesaugt und gesäubert wird. Dadurch können besonders große Haltekräfte erreicht werden, wenn das Bohrloch anschließend dazu verwendet wird, einen mechanischen und/oder chemischen Anker aufzunehmen. Außerdem kann durch die Absaugung des Staubs durch die Absaugvorrichtung 12 verhindert werden, dass der Staub, der bei der Arbeit mit der Werkzeugmaschine 10 entsteht, in zu großer Menge in die Umgebung der Werkzeugmaschine 10 gelangt und so zu einer Gefahr für den Nutzer der Werkzeugmaschine 10 wird.

Die Werkzeugmaschine 10 kann darüber hinaus mindestens ein Ausgabemittel 24 für die Ausgabe von Warnsignalen aufweisen. Die Warnsignale werden vorzugsweise dann ausgegeben, wenn der ermittelte Volumenstrom stark von den vorgegebenen Vergleichs- oder Schwellwerten abweicht. Bei den Warnsignalen kann es sich um optische, akustische, haptische oder sonstige Warnsignale handeln. Wenn es sich bei den Warnsignalen um optische Warnsignale handelt, können die Mittel 24 zur Abgabe der Warnsignale als Leuchtdioden ausgebildet sein. Wenn es sich bei den Warnsignalen um akustische Warnsignale handelt, können die Mittel 24 zur Abgabe der Warnsignale als Lautsprecher ausgebildet sein. Figur 1 zeigt eine beispielhafte Position für die Anbringung eines solchen Ausgabemittels 24 für Warnsignale an der Werkzeugmaschine 10. Die Oberseite der Werkzeugmaschine 10 hat sich als guter Anbringungsort für Mittel 24 zur Ausgabe von optischen Warnsignalen erwiesen, da die Oberseite der Werkzeugmaschine 10 gut für den Nutzer einsehbar ist.

In Figur 1 wird eine netzbetriebene Werkzeugmaschine 10 mit einem Netzanschluss 26 gezeigt. Die Erfindung kann aber selbstverständlich auch bei batteriebetriebenen Werkzeugmaschinen 10 eingesetzt werden. Darüber hinaus kann die Werkzeugmaschine 10 einen ersten Griff 28, sowie einen zweiten Griff 30 aufweisen. Der Nutzer kann die Griffe 28, 30 der Werkzeugmaschine 10 mit seinen Händen umschließen und die Werkzeugmaschine 10 so führen bzw. bedienen. Um Eingaben an der Werkzeugmaschine 10 vorzunehmen, kann die Werkzeugmaschine 10 Bedienelemente 32 umfassen. Bei den Bedienelementen 32 kann es sich um Drehschalter, Knöpfe, Taster oder dergleichen handeln, ohne darauf beschränkt zu sein.

### Bezugszeichenliste

- 10: Werkzeugmaschine
- 12: Absaugvorrichtung
- 14: Werkzeug
- 16: Anschlussvorrichtung
- 18: Mittel zur Ermittlung eines Volumenstroms
- 20: Sauggerät
- 22: Saugschlauch
- 24: Ausgabemittel für das Warnsignal
- 26: Netzanschluss
- 28: erster Griff
- 30: zweiter Griff
- 32: Bedienelement

## Patentansprüche

1. Werkzeugmaschine (10), die zur Durchführung von Arbeiten mit einem Werkzeug (14) verbindbar ist, wobei die Werkzeugmaschine (10) eine Absaugvorrichtung (12) zum Absaugen von Staub aufweist, der bei der Arbeit mit der Werkzeugmaschine (10) entsteht,
**dadurch gekennzeichnet, dass**
die Werkzeugmaschine (10) mindestens ein Mittel (18) zur Ermittlung eines Volumenstroms durch die Absaugvorrichtung (12) aufweist.

2. Werkzeugmaschine (10) nach Anspruch 1
**dadurch gekennzeichnet, dass**
das mindestens eine Mittel (18) zur Ermittlung des Volumenstroms einen Drucksensor, einem Temperatursensor, einen Wegsensor, einen kapazitiven Sensor, einen induktiven Sensor und/oder einen Ultraschall-Sensor umfasst.

3. Werkzeugmaschine (10) nach Anspruch 1 oder 2
**dadurch gekennzeichnet, dasss**
das mindestens eine Mittel (18) zur Ermittlung des Volumenstroms an einer strömungstechnisch günstigen Stelle angeordnet vorliegt.

4. Werkzeugmaschine (10) nach einem der vorhergehenden Ansprüche
**dadurch gekennzeichnet, dass**
die Werkzeugmaschine (10) eine Anschlussvorrichtung (16) für ein Sauggerät (20) aufweist, um den Staub, der bei der Arbeit mit der Werkzeugmaschine (10) entsteht, abzusaugen.

5. Werkzeugmaschine (10) nach Anspruch 4
**dadurch gekennzeichnet, dass**
das mindestens eine Mittel (18) zur Ermittlung des Volumenstroms im Bereich der Anschlussvorrichtung (16) für ein Sauggerät (20) angeordnet vorliegt.

6. Werkzeugmaschine (10) nach Anspruch 4 oder 5
**dadurch gekennzeichnet, dass**
die Werkzeugmaschine (10) mit Hilfe eines Saugschlauchs (22) mit dem Sauggerät (20) verbindbar ist.

7. Werkzeugmaschine (10) nach einem der vorhergehenden Ansprüche
**dadurch gekennzeichnet, dass**
das mindestens eine Mittel (18) zur Ermittlung des Volumenstroms so angeordnet wird, dass eine Messrichtung für den Volumenstrom längs und/oder quer in der Absaugvorrichtung (12) angeordnet ist.

8. Werkzeugmaschine (10) nach einem der vorhergehenden Ansprüche
**dadurch gekennzeichnet, dass**
die Werkzeugmaschine (10) eine Steuerelektronik (24) zur Auswertung von Daten, die von dem mindestens einen Mittel (18) zur Ermittlung des Volumenstroms ermittelt werden, aufweist.

9. Werkzeugmaschine (10) nach einem der vorhergehenden Ansprüche
**dadurch gekennzeichnet, dass**
die Werkzeugmaschine (10) Mittel (24) zur Ausgabe von Warnsignalen umfasst.

10. Werkzeugmaschine (10) nach einem der vorhergehenden Ansprüche
**dadurch gekennzeichnet, dass**
die Mittel (24) zur Ausgabe von Warnsignalen dazu eingerichtet sind, Warnsignale abzugeben, wenn der Volumenstrom von dem vorgegebenen Schwellwert abweicht.

11. Verfahren zum Betrieb einer Werkzeugmaschine (10) nach einem der vorhergehenden Ansprüche
**gekennzeichnet durch die folgenden Verfahrensschritte:**
a) Betrieb der Werkzeugmaschine (10),
b) Absaugung von Staub, der bei der Arbeit mit der Werkzeugmaschine (10) entsteht, durch die Absaugvorrichtung (12),
c) Ermittlung des Volumenstroms durch die Absaugvorrichtung (12) durch mindestens ein Mittel (18) zur Ermittlung des Volumenstroms,
d) Vergleich eines Messwerts für den Volumenstrom mit mindestens einem vorgegebenem Schwellwert,
e) Ausgabe eines Warnsignals, wenn der Messwert für den Volumenstrom von dem vorgegebenen Schwellwert abweicht.

12. Verfahren nach Anspruch 11
**dadurch gekennzeichnet, dass**
die Werkzeugmaschine (10) ausgeschaltet wird, wenn der Messwert für den Volumenstrom von dem vorgegebenen Schwellwert abweicht.
